Europäisches Patentamt

European Patent Office

Office européen des brevets

(11) Publication number: **0 196 610**
**B1**

(12) **EUROPEAN PATENT SPECIFICATION**

(45) Date of publication of patent specification: **24.01.90**

(51) Int. Cl.⁵: **G 21 C 3/32**

(21) Application number: **86104123.4**

(22) Date of filing: **25.03.86**

(54) Guide thimble captured locking tube in a reconstitutable fuel assembly.

(30) Priority: **29.03.85 US 717991**

(43) Date of publication of application:
**08.10.86 Bulletin 86/41**

(45) Publication of the grant of the patent:
**24.01.90 Bulletin 90/04**

(84) Designated Contracting States:
**BE DE FR GB IT SE**

(56) References cited:
**EP-A-0 041 014**
**EP-A-0 098 774**
**EP-A-0 140 588**
**FR-A-2 493 024**
**FR-A-2 533 741**

(73) Proprietor: **WESTINGHOUSE ELECTRIC CORPORATION**
**Westinghouse Building Gateway Center**
**Pittsburgh Pennsylvania 15222 (US)**

(72) Inventor: **Paul, Gary Edward**
**350 Deauville Drive No. 6**
**Monroeville Pennsylvania 15146 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

This invention relates generally to fuel assemblies for nuclear reactors and, more particularly, to improvements in releasably locking the top nozzle of a fuel assembly to the upper ends of the control-rod guide thimbles thereof.

In most nuclear reactors, the reactor core is composed of a large number of elongate fuel assemblies, each including a plurality of fuel rods and control-rod guide thimbles held in any organized array by means of grids spaced along the fuel assembly length and attached to the control-rod guide thimbles. Top and bottom nozzles on opposite ends of the fuel assembly are secured to end portions of the guide thimbles extending the fuel rods. At the top end of the fuel assembly, the guide thimbles extend into passageways of the adapter plate of the top nozzle and therein are attached to the latter. The guide thimbles may each include an upper sleeve for attachment to the top nozzle.

During operation of such fuel assembly in a nuclear reactor, some of the fuel rods may occasionally develop cracks resulting primarily from internal stresses, through which cracks radioactive fission products may pass into the primary coolant of the reactor. Such products may also be released into a flooded reactor cavity during refueling operations or into the coolant circulated through pools where the spent fuel assemblies are stored. Since the fuel rods are part of the integral assembly of guide thimbles connected to the top and bottom nozzles, it is difficult to detect and remove the failed rods.

Until recently, in order to gain access to these rods it was necessary to remove the affected assembly from the nuclear reactor core and then break the welds which secured the nozzles to the guide thimbles. In so doing, the destructive action often rendered the fuel assembly unfit for further use in the reactor because of the damage done to both the guide thimbles and the nozzle which prohibits rewelding.

In view of the high cost associated with replacing fuel assemblies, and in order to minimize operating and maintenance expenses, considerable interest has arisen in reconstitutable fuel assemblies. The general approach to making a fuel assembly reconstitutable is to provide it with a removable top nozzle, a reconstitutable fuel assembly being disclosed in EP—A—0 140 588.

The attaching structure includes a plurality of outer sockets defined in an adapter plate of the top nozzle, a plurality of inner sockets each formed on an upper end portion of each guide thimble, and a plurality of removable locking tubes inserted in the inner sockets to maintain them in locking engagement with the outer sockets. Each outer socket is in the form of a passageway through the adapter plate which has an annular groove. Each inner socket is in the form of a hollow upper end portion of the guide thimble having an annular bulge which seats in the annular groove when the guide thimble end portion is inserted in the adapter plate passageway. A plurality of elongate axial slots are provided in the guide thimble upper end portion to permit inward elastic collapse of the slotted portion so as to allow the larger bulge diameter to be inserted within and removed from the annular circumferential groove in the passageway of the adapter plate.

The locking tube is inserted from above the top nozzle into a locking position in the hollow upper end portion of the guide thimble forming the inner socket. When inserted in its locking position, the locking tube retains the bulge of the inner socket in its expanded locking engagement with the annular groove and prevents the inner socket from being moved to a compressed releasing position in which it could be withdrawn from the outer socket. In this manner, the locking tubes maintain the inner sockets in locking engagement with the outer sockets, and thereby maintain the attachment of the top nozzle on the upper ends of the guide thimbles.

In order to prevent inadvertent escape of the locking tubes due to vibration and the like, it is known to secure the locking tubes in their locking positions. Thus, after insertion of the locking tubes into their locking positions within the inner sockets of the upper end portions of the guide thimbles, a pair of bulges are formed in the upper portion of each locking tube. These bulges mate with the circumferential bulge in the upper end portion of the guide thimble and provide an interference fit therewith.

When reconstitution of the fuel assembly is undertaken, the locking tubes must first be removed from the top nozzle, whereupon they become "loose parts" to be handled separately and requiring storage, retention and accountability during performance of underwater nuclear fuel assembly reconstitution activities. After failed fuel rods have been removed and replaced, and following remounting of the top nozzle, handling of loose locking tubes is again required when either the same locking tubes or replacement tubes must be inserted and secured in the guide-thimble end portions.

This practice has several disadvantages. First, it requires a large number of locking tubes to be handled and a large inventory thereof to be maintained. Second, provision must be made for disposal of discarded irradiated locking tubes. Third, after each locking tube is inserted, a deforming operation must be carried out remote to provide the bulges in each tube. And, fourth, an inspection of bulges must be carried out remotely to ascertain whether the bulges were made to the correct dimension.

Further prior art approaches are disclosed in FR—A—2 493 024 and in EP—A—0 098 774.

In FR—A—2 493 024, the lower end of a locking tube and the upper end of the guide-thimble are screw-threaded and the locking tube is screwed with its lower end into the upper guide thimble end. In EP—A—0 098 774, the locking tube engages with its lower portion the upper portion of the guide thimble and has its upper portion locked within the passageway of the adapter plate by means of a snap ring engaging mating grooves provided in the adapter plate passageway wall and in the outer circumferential wall of the upper locking tube portion.

With these two latter prior art approaches, while not requiring a deforming operation after insertion of each locking tube, the problem of handling a plurality of a large number of loose locking tubes remains.

Thus, the invention introduces a push-down concept in which the locking tubes, instead of not being removed from the fuel-assembly guide thimbles during underwater reconstitution, are pushed farther into the guide-thimble end portions. This push-down concept improves the reconstitution operation in several ways. First, it eliminates the need for tracking separate pieces during the reconstitution operation. Second, it reduces the time required to reconstitute the fuel assembly by eliminating the locking tube deforming operation after remounting of the top nozzle. Third, by retaining the locking tubes within the guide thimbles and reusing them, provisions are not necessary for the handling and disposal of irradiated locking tubes. To summarize, by the design change in the locking tube concept contemplated by the present invention, an easier, more trouble-free removal and remounting of the top nozzle during reconstitution is achieved which overall results in a more efficent and reliable reconstitution operation.

The cooperating means comprise a pair of upper and lower circumferential bulges formed on the guide-thimble upper end portion, and a radial protuberance formed in a lower portion of the locking tube. The bulges on the guide-thimble end portion are located below the adapter plate when the latter is in locking engagement upon the guide-thimble upper end portion, and they are axially spaced from one another such that the upper bulge will mate with the radial protuberance on the locking tube to retain the latter in its upper or locking position, and the lower bulge will mate with said radial protuberance to retain the locking tube in its lower or unlocking position. The radial protuberance on the locking tube may be a circumferential bulge, the locking tube being provided with at least one slot extending axially through said lower portion of the locking tube from the lower edge thereof so as to facilitate resilient compression and expansion of the locking tube lower portion upon movement of the locking tube between its upper and lower positions.

A preferred embodiment of the invention will now be described, by way of example only, with reference to the accompanying drawings, in which:

Fig. 1 is a side elevational view, with parts partially sectioned and broken away for clarity, of a reconstitutable fuel assembly;

Fig. 2 is a sectioned, exploded view of the components of the attaching structure embodying the invention and associated with the top nozzle and the guide thimbles of the reconstitutable fuel assembly;

Fig. 3 is a bottom plan view, as seen along line 3—3 of Fig. 2, of a locking tube forming part of the attaching structure;

Fig. 4 is a top plan view, as seen along line 4—4 of Fig. 2 of the upper end portion of a guide thimble;

Fig. 5 is a sectional view of the components of the attaching structure of Fig. 2 shown in the assembled state;

Fig. 6 is a sectional view similar to Fig. 5 but showing the locking tube in its unlocking position; and

Fig. 7 is another sectional view similar to Figs. 5 and 6 but now showing the top nozzle removed from the upper end portion of the guide thimble and the locking tube captured in the guide-thimble upper end portion.

In the following description, like reference characters designate like or corresponding parts throughout the several views, and terms such as "forward", "rearward", "left", "right", "upwardly", "downwardly", and the like, are employed as words of convenience not to be construed as limiting terms.

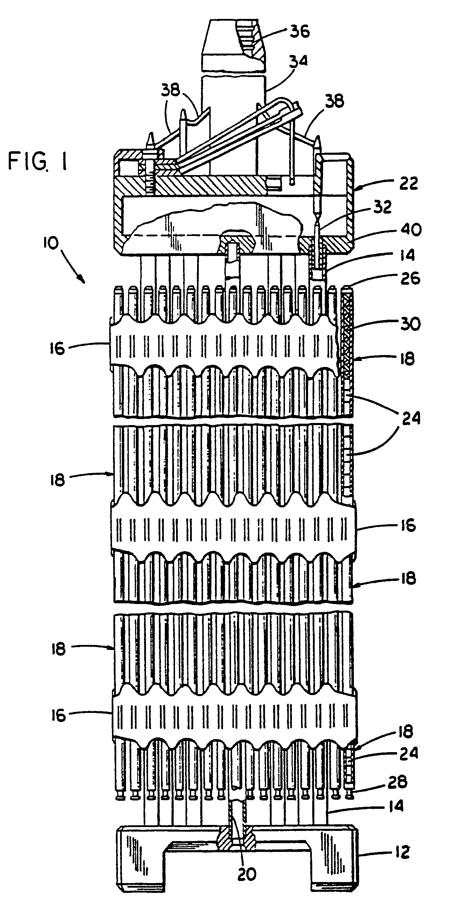

Referring now to the drawings, and particularly to Fig. 1, the reconstitutable fuel assembly shown therein in vertically foreshortened form and generally designated with numeral 10, comprises a lower end structure or bottom nozzle 12 for supporting the assembly on the lower core plate (not shown) in the core region of a reactor (not shown), a plurality of guide tubes or thimbles 14 which extend from the bottom nozzle 12, transverse grids 16 axially spaced along the guide thimbles 14, an organized array of elongate fuel rods 18 transversely spaced and supported by the grids 16, an instrumentation tube 20, and an upper end structure or top nozzle 22 removably attached to the upper ends of the guide thimbles 14 to form an integral asembly capable of being conventionally handled without damage to the assembly parts.

Each fuel rod 18, having its opposite ends sealed by means of end plugs 26, 28, containing nuclear fuel pellets 24 maintained firmly attached by a plenum spring 30.

Control rods 32 are reciprocally movable in predetermined ones of the guide thimbles 14, the top nozzle 22 including a rod cluster control mechanism 34 having an internally threaded cylindrical member 36 with radical flukes or arms 38 from which the control rods 32 are supported, all as well known in the art.

As illustrated in Fig. 1, the top nozzle 22 has a lower adapter plate 40 with a plurality of control-rod passageways 42 (only one being shown) formed therethrough, and with upper end portions 44 of the control-rod guide thimbles 14 coaxially positioned within the respective passageways 42. In order to render the fuel rods 18 accessible, the top nozzle 22 is removable from the upper end portions 44 of the guide thimbles 14 being connected thereto by an attaching structure generally designated 46 and now to be described.

## Top Nozzle Attaching Structure

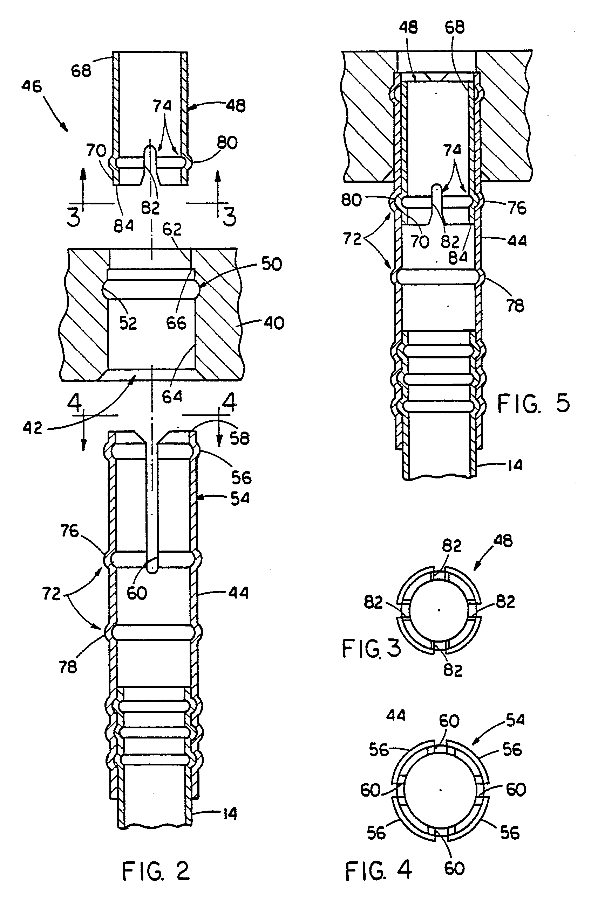

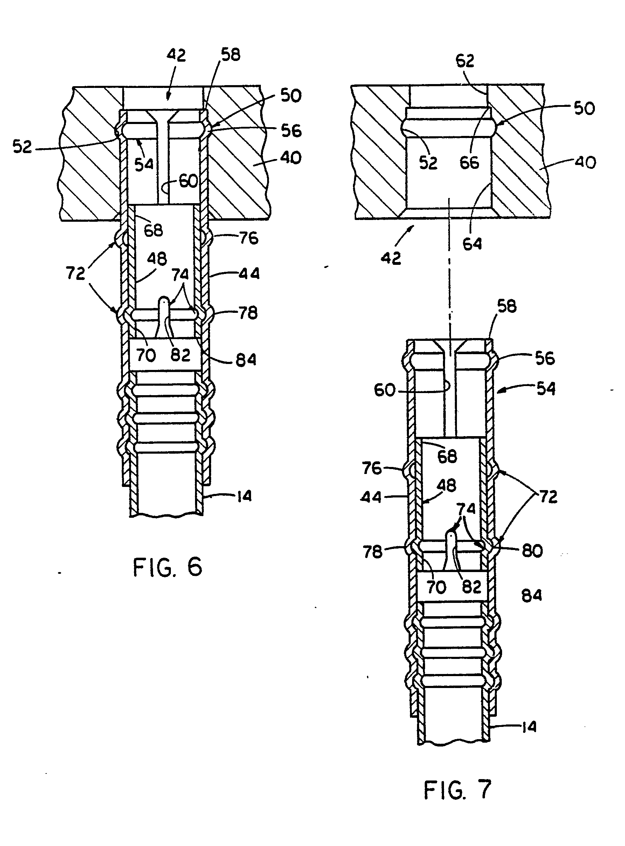

As best seen from Figs. 2 and 5, the top nozzle attaching structure 46 for each guide thimble comprises an outer socket 50 defined in the top nozzle adapter plate 40 by one of the passageways 42 and having an annular groove 52 formed circumferentially in the wall thereof, an inner socket 54 on the upper end portion 44 of the associated guide thimble 14, and a locking tube 48 inserted in the inner socket 54 to maintain it in locking engagement with the outer socket 50.

The inner socket 54 on each guide thimble 14 includes an annular bulge 56 formed circumferentially on the hollow upper end portion 44 of the guide thimble only a short distance below its upper edge 58. Elongate slots 60 are formed axially in the upper end portion 44 of each guide thimble 14 to permit inward elastic collapse of the slotted end portion to a compressed position so as to allow the circumferential bulge 56 thereon to be inserted within and removed from the annular groove 52 in the associated adapter plate passageway 42. The annular bulge 56 seats in the annular groove 53 when the guide thimble end portion 44 is inserted in the adapter plate passageway 42 and has assumed an expanded position. In such manner, the inner socket 54 of each guide thimble 14 is inserted into and withdrawn from locking engagement with one of the outer sockets 50 of the adapter plate 40.

More particularly, the axially extending passageway 42 in the adapter plate 40 which defines the outer socket 50 is composed of an upper bore 62 and a lower bore 64. The lower bore 64 is of considerably greater axial length than the upper bore 62 and contains the annular groove 52 which is spaced a short distance below a ledge 66 formed at the intersection of the upper and lower bores 62, 64. The lower bore 64 has a diameter which is greater than that of the upper bore 62; therefore, the ledge 66 faces in a downward direction. The primary purpose of the ledge 66 is to serve as a stop or an alignment guide for proper axial positioning of the upper end portion 44 in the passageway 42 when the inner socket 54 is inserted into the outer socket 50. As seen from Figs. 5 and 6, the upper edge 58 abuts the ledge 66.

## Improved Top Nozzle Locking and Unlocking Features

In Figs. 2 to 7, there is also shown the improvement provided according to the invention with respect to the locking tube 48 and the guide thimble upper end portion 44. The locking tube 48 has upper and lowr portions 68, 70 and is mounted within the guide thimble upper end portion 44 for axial movement therein between an upper locking position (Fig. 5) and a lower unlocking position (Fig. 6). When he locking tube 48 is in the upper locking position thereof, its upper portion 68, which is an elongate tubular body having a generally uniform diameter, is coextensive with the inner and outer sockets 54, 50 and retains the inner socket 54 seated within the outer socket 50, thereby maintaining the adapter plate 40 and the guide thimble upper end portion 44 in locking engagement. When the locking tube 48 is in the lower or unlocking position thereof, its upper portion 68 is located below the inner and outer sockets 54, 50 thereby permitting unseating of the inner socket 54 from the outer socket 50 and thereby release of the adapter plate 40 from the guide thimble upper end portion 44.

In accordance with the invention, the guide thimble upper end portion 44 and the locking tube 48 are provided with cooperating means generally designated 72 and 74 and adapted to mate so as to retain the locking tube 48 either in its upper position (Fig. 5) or in its lower position (Fig. 6) within the guide thimble upper end portion 44. The cooperating means 72 on the guide thimble upper end portion 44 comprises a pair of upper and lower circumferential bulges 76, 78 which are located below the adapter plate 40 when the inner socket 54 of the guide thimble upper end portion 44 is in locking engagement with outer socket 50 in the adapter plate passageway 42. The upper and lower bulges 76, 78 are spaced from one another in the axial direction of the guide thimble upper end portion 44 such that the upper bulge 76 is located to retain the locking tube 48 in its upper locking position and the lower bulge 78 is located to retain the tube 48 in its lower unlocking position.

The cooperating means 74 on the locking tube 48 includes a radial protuberance in the form of a circumferential bulge 80 defined on the lower portion 70 of the locking tube 48 which is seatable in either of the upper and lower circumferential bulges 76, 78 defined on the guide thimble upper end portion 44. In addition, the cooperating means 74 on the locking tube 48 includes means defining at least one, but preferably, as seen from Fig. 3, four slots 82 in the locking tube 48 extending axially upward in the lower portion 70 of the locking tube 48 from a lower edge 84 thereof. The slots 82 allow radial compression and expansion of the lower portion 70 of the locking tube 48 upon movement of the locking tube between, and positioning of the tube in, its upper and lower positions in which the circumferential bulge 80 of tube is seated respectively in the upper and lower circumferential bulges 76, 78 of the guide thimble upper end portion 44.

In order to enable the top nozzle 22 to be removed from the guide thimbles 14, each locking tube 48 is moved from its upper locking position (Fig. 5 to its lower unlocking position (Fig. 6), thereby to enable the inner socket 54 to be collapsed inwardly and disengaged from the outer socket 50. When all of the locking tubes 48 have been moved to their lower or unlocking positions, the adapter plate 40 is free to be lifted from the guide thimbles 14, shown in Fig. 7. The top nozzle 22 is remounted on the guide thimbles 14 by performing the above steps in reverse.

**Claims**

1. An arrangement for releasably affixing the top nozzle of a reconstitutable fuel assembly to an upper end portion (44) of a guide thimble (14) extending into a passageway (42) formed in an adapter plate (40) of the top nozzle, comprising a locking tube (48) for maintaining the guide thimble upper end portion (44) in locking engagement with said adapter plate (40), and cooperating means (74, 76) defined on said locking tube (48) and on said guide-thimble upper end portion (44), respectively, for retaining said locking tube (48) in a locking position, characterized in that said locking tube (48) is mounted within the guide thimble upper end portion (44) for axial sliding movement therein between an upper locking position (Figure 5) in which the locking tube maintains the guide-thimble upper end portion (44) in locking engagement with said adapter plate (40), and a lower unlocking position (Figures 6, 7) for enabling the adapter plate (40) to be released from said guide-thimble upper end portion (74), and that cooperating means (74, 78) are defined on said locking tube (48) and on said guide-thimble upper end portion (44) respectively, for retaining said locking tube (48) within said guide-thimble upper end portion in said lower unlocking position (Figures 6, 7) thereof.

2. An arrangement according to claim 1, characterized in that said cooperating means (72, 74) comprise a pair of upper and lower circumferential bulges (76, 78) formed on said guide-thimble upper end portion (44), and a radial protuberance (80) formed on a lower portion (70) of said locking tube (48), said bulges (76, 78) being located below said adapter plate (40) when the latter is in locking engagement with the guide-thimble upper end portion (44), and being axially spaced from one another such that the upper bulge (76) mates with said radial protuberance (80) on the locking tube (48) to retain the latter in the locking position (Figure 5) thereof, and the lower bulge (78) mates with said radial protuberance (80) to retain the locking tube (48) in the unlocking position (Figures 6, 7) thereof.

3. An arrangement according to claim 2, characterized in that said radial protuberance (80) is a circumferential bulge.

4. An arrangement according to claim 2 or 3, characterized in that said locking tube (48) has formed therein at least one slot (82) extending from the lower edge (84) of the locking tube axially through said lower portion (70) thereof to facilitate resilient radial compression and expansion of said lower portion (70).

5. An arrangement according to claim 2, 3 or 4, characterized in that said locking tube (48) has a tubular body portion (68) of substantially uniform diameter extending from said lower portion (70) to the upper end of the locking tube.

**Patentansprüche**

1. Anordnung zum lösbaren Befestigen des oberen Endstücks eines wiederherstellbaren Brennelements am oberen Endteil (74) eines Führungsrohrs (14), das in eine in einer Adapterplatte (40) des oberen Endstücks gebildete Durchführungsöffnung (42) hineinragt, mit einem Arretierungsrohr (48) zum Halten des oberen Führungsrohrendteils (44) in arretierendem Eingriff mit der Adapterplatte (70), und mit an dem Arretierungsrohr (48) und an dem oberen Führungsrohrendteil (44) gebildeten zusammenwirkenden Mitteln (74, 76) zum Halten des Arretierungsrohres (48) in der Arretierungsposition, dadurch gekennzeichnet, daß das Arretierungsrohr (48) in dem oberen Führungsrohrendteil (44) axial zwischen einer oberen Arretierungsposition (Fig. 5), in welcher das Arretierungsrohr den oberen Führungsrohrendteil (74) in arretierendem Eingriff mit der Adapterplatte (40) hält, und einer unteren Löseposition (Fig. 6, 7) verschiebbar montiert ist, in welcher die Adapterplatte (40) vom oberen Führungsrohrendteil (44) abnehmbar ist, und daß miteinander zusammenwirkende Mittel (74, 78) am Arretierungsrohr (48) und am oberen Führungsrohrendteil (44) zum Halten des Arretierungsrohrs (48) innerhalb des oberen Führungsrohrendteil in seiner unteren Löseposition (Fig. 6, 7) gebildet sind.

2. Anordnung nach Anspruch 1, dadurch gekennzeichnet, daß die miteinander zusammenwirkenden Mittel (72, 74) ein Paar von oberen und unteren Umfangssicken (76, 78), die in dem oberen Führungsrohrendteil (44) sind, und einen am unteren Teil (70) des Arretierungsrohres (48) gebildeten radialen Vorsprung (80) aufweisen, und daß die Sicken (76, 78) bei in Arretierungseingriff dem oberen Führungsrohrendteil (44) befindlicher Adapterplatte (40) unterhalb derselben und mit gegenseitigem Axialabstand angeordnet sind, derart, daß die obere Sicke (76) mit dem radialen Vorsprung (80) des Arretierungsrohres (48) zusammenwirkt, um das letztere in dessen Arretierungsposition (Fig. 5) zu halten, und die untere Sicke (78) mit dem radialen Vorsprung (80) zusammenwirkt, um das Arretierungsrohr (48) in dessen Löseposition (Fig. 6, 7) zu halten.

3. Anordnung nach Anspruch 2, dadurch gekennzeichnet, daß der radiale Vorsprung (80) eine Umfangssicke ist.

4. Anordnung nach Anspruch 2 oder 3, dadurch gekennzeichnet, daß das Arretierungsrohr (48) mindestens eine darin gebildeten Schlitz (82) aufweist, der vom unteren Ende (84) des Arretierungrohrs axial durch dessen unteren Teil (70) verläuft, um ein elastisches Zusammendrücken und Aufspreizen des unteren Teils (70) zu erleichtern.

5. Anordnung nach Anspruch 2, 3 oder 4, dadurch gekennzeichnet, daß das Arretierungsrohr (48) einen Rohrkörper (68) mit in wesentlichem gleichförmigen Durchmesser aufweist, der sich von dem genannten unteren Teil (70) bis zum oberen Ende des Arretierungsrohrs erstreckt.

## Revendications

1. Agencement pour fixer de manière amovible l'embout supérieur d'un assemblage combustible reconstituable à une partie (44) d'extrémité supérieur d'un tube de guidage (14) passant par un passage (42) formé dans un plaque d'adaptation (40) de l'embout supérieur, comprenant une douille de verrouillage (48) pour maintenir la partie (44) d'extrémité supérieure du tube de guidage en engagement de verrouillage avec ladite plaque d'adaptation (40), et des moyens de coopération (74, 76) définis sur ladite douille de verrouillage (48) et sur ladite partie (44) d'extrémité supérieure du tube de guidage, respectivement, pour retenir ladite douille de verrouillage (48) dans une position de verrouillage, caractérisé par le fait que ladite douille de verrouillage (48) est montée à l'intérieur de la partie (44) d'extrémité supérieure du tube de guidage pour subir un mouvement coulissant dans la direction axiale à l'intérieur du tube entre une position supérieure de verrouillage (fig. 5) dans laquelle la douille de verrouillage maintient la partie (44) d'extrémité supérieure du tube de guidage en engagement de verrouillage avec ladite plaque d'adaptation (40), et une position inférieure de déverrouillage (fig. 6, 7) pour permettre de dégager la plaque d'adaptation (40) de ladite partie (44) d'extrémité supérieure et par le fait que des moyens de coopération (74, 78) sont définis sur ladite douille de verrouillage (48) et sur ladite partie (44) d'extrémité supérieure du tube de guidage, respectivement, pour retenir ladite douille de verrouillage (48) à l'intérieur de ladite partie d'extrémité supérieure du tube de guidage dans ladite position inférieure de déverrouillage de cette douille (fig. 6, 7).

2. Agencement selon la revendication 1, caractérisé par le fait que lesdits moyens de coopération (72, 74) comprennent une paire de renflements circonférentiels supérieur et inférieur (76, 78) formés sur ladite partie (44) d'extrémité supérieure du tube de guidage, et une protubérance radiale (80) formée sur une partie inférieure (70) de ladite douille de verrouillage (48), lesdits renflements (76, 78) étant situés au-dessous de ladite plaque d'adaptation (40) quand cette dernière se trouve en engagement de verrouillage avec la partie (44) d'extrémité supérieure du tube de guidage, et étant espacés l'un de l'autre dans la direction axiale de manière que le renflement supérieur (76) s'adapte avec ladite protubérance radiale (80) de la douille de verrouillage (48) pour retenir cette dernière dans sa position de verrouillage (fig. 5), et que le renflement inférieur (78) s'dapte avec ladite protubérance radiale (80) pour retenir la douille de verrouillage (48) dans la position de déverrouillage de celle-ci (fig. 6, 7).

3. Agencement selon la revendication 2, caractérisé par le fait que ladite protubérance radiale (80) est un renflement circonférentiel.

4. Agencement selon la revendication 2 ou 3, caractérisé par le fait que ladite douille de verrouillage (48) comporte au moins une fente (82) s'étendant depuis le bord inférieur (84) de la douille de verrouillage dans la direction axiale à travers ladite partie inférieure (70) de cette douille pour faciliter la compression et l'expansion radiales élastiques de ladite partie inférieure (70).

5. Agencement selon l'une des revendications 2, 3 ou 4, caractérisé par le fait que ladite douille de verrouillage (48) comporte une partie principale tubulaire (68) de diamètre sensiblement uniforme s'étendant depuis ladite partie inférieure (70) jusqu'à l'extrémité supérieure de la douille de verrouillage.

FIG. I

EP 0 196 610 B1

1

EP 0 196 610 B1

FIG. 2

FIG. 3

FIG. 4

FIG. 5

2

EP 0 196 610 B1

FIG. 6

FIG. 7

3